# EUROPEAN PATENT APPLICATION

(11) **EP 2 696 271 A2**
(43) Date of publication of application: **12.02.2014**
(21) Application number: 13178274.0
(22) Date of filing: 26.07.2013
(51) Int. Cl.: G06F 3/0481

(54) **Method and apparatus for controlling a display**

(30) Priority: 09.08.2012 KR 20120087363
(71) Applicant: Samsung Electronics Co., Ltd, Gyeonggi-do 443-742 (KR)
(72) Inventor: Kim, Han-soo, Gyeonggi-do (KR); Lee, Dong-heon, Seoul (KR); Lee, Chang-soo, Seoul (KR)
(74) Representative: Brandon, Paul Laurence

(57) **Abstract**

A display apparatus and a method of controlling a display apparatus which is controlled by an input are provided. A method of controlling a display apparatus which is controlled by an input displays a cursor and a selectable icon, moves the cursor according to a user manipulation input through the input; and removes the cursor and changes display status of the icon in response to the cursor moving into a preset region based on a location of the icon. As a result, the display apparatus can reduce the unnecessary load of the graphics processing and provide an intuitive GUI to the user.

## Description

### CROSS-REFERENCE TO RELATED APPLICATIONS

This application claims the benefit under 35 U.S.C. § 119 (a) from Korean Patent Application No. 2012-0087363 filed on August 9, 2012 in the Korean Intellectual Property Office, the entire disclosure of which is incorporated herein by reference, in its entirety.

### BACKGROUND

### Field

The inventive concept relates generally to a display apparatus and a method of controlling the display apparatus. More particularly, the present general inventive concept relates to a display apparatus for controlling a cursor and for displaying the status of an icon when the cursor and a selectable icon are displayed. The inventive concept also relates to a method of controlling the display apparatus.

### Description of the Related Art

A display device provides various functions. For example, a smart TV not only provides a function of conventional broadcasting reception but also provides various functions such as an Internet search function and a communications function. Particularly, displays provide various functions using a cursor controlled by an input and at least one icon.

However, when the cursor moved by a user manipulation input through the input is placed on an icon, a conventional display displays the cursor and changes the display status (for example, display the highlight) of the icon pointed to by the cursor. That is, the conventional display device displays the two GUIs (the highlight and the cursor) at the same time.

As the redundant GUIs for the same purpose are displayed, the display is subject to the increasing workload due to an unnecessary graphics computation.

### SUMMARY

An aspect of the inventive concept has been provided to solve the above-mentioned and/or other problems and disadvantages and an aspect of the inventive concept provides a display apparatus which reduces graphics computation and provides a user with an intuitive UI, such that, when a cursor is placed in a preset region based on an icon, the cursor is removed and the display status of the icon is changed. The inventive concept also providesa method of controlling the display apparatus.

According to an aspect of the inventive concept, a method of controlling a display apparatus which is controlled by an input, includes displaying a cursor and a selectable icon; moving the cursor according to a user manipulation through the input; and when the cursor moves into a preset region based on a location of the icon, removing the cursor and changing the display status of the icon.

When the cursor moves into the preset region based on the location of the icon, the changing operation may remove the cursor and may highlight the icon.

When a plurality of icons is displayed and the user manipulation is re-input through the input, the changing operation may include, according to the re-input user manipulation, moving the highlight of the icon to one of the plurality of the icons.

When the input is an absolute mapping type of input, the moving operation may move the highlight to an icon which corresponds to an input point of the user manipulation which is input to the absolute mapping type input.

When the input is a relative mapping type of input, the moving operation may move the highlight to the other icon according to a direction of the input manipulation performed by the user.

The method may further include a situation when the input is a relative mapping type of input and a user manipulation is input in a direction away from the highlighted icon to a region comprising no icon, which changes the highlight to the cursor.

The method may further include when the input is an absolute mapping type of input and a user manipulation is input to a region outside the plurality of the icons through the input, changing the highlight to the cursor of a user manipulation input point.

The operation for changing the icon may create an animation effect which continuously moves from the highlighted icon to the user manipulation input point, and may change the highlight to the cursor.

A display apparatus controlled by an input device includes a display part which displays a cursor and a selectable icon; and a controller which moves the displayed cursor according to an input user manipulation, and removes the cursor and changes the display status of the icon when the cursor moves into a preset region based on a location of the icon.

When the cursor moves into the preset region based on the location of the icon, the controller may control the display to remove the cursor and to highlight the icon.

When a plurality of icons is displayed and a user manipulation is re-input, the controller may control, according to the re-input user manipulation, the display part to move the highlight of the icon to one of the plurality of the icons.

When the input device is an an absolute mapping type input device , the controller may control the display to move the highlight to an icon which corresponds to an input point of the user manipulation, which is input to the absolute mapping type input device.

When the input is a relative mapping type input , the controller may control the display to move the highlight of the icon to another icon which corresponds to a direction of the user manipulation which is input to the the relative mapping type input.

When the input is a relative mapping type input and a user manipulation is input in a direction away from the highlighted icon to a region comprising no icon, the controller may control the display to change the highlight to the cursor.

When the input e is an absolute mapping type input and a user manipulation is input to a region outside the plurality of the icons through the input, the controller may control the display to change the highlight to the cursor of a user manipulation input point.

When a user manipulation is input to a region outside the plurality of the icons through the input, the controller may create an animation effect which continuously moves from the highlighted icon to the user manipulation input point, and may change the highlight to the cursor.

### BRIEF DESCRIPTION OF THE DRAWING FIGURES

These and/or other aspects and advantages of the inventive concept will become apparent and more readily appreciated from the following description of the embodiments, taken in conjunction with the accompanying drawings of which:

FIG. 1 is a simplified diagram of a display apparatus according to an exemplary embodiment of the inventive concept;

FIG. 2 is a detailed diagram of a display apparatus according to another exemplary embodiment of the inventive concept;

FIG. 3 is a diagram of a program stored to a storage device according to an exemplary embodiment of the inventive concept;

FIG. 4 is a diagram of change of a cursor to highlight according to an exemplary embodiment of the inventive concept;

FIG. 5 is a diagram of the highlight movement using an input device of a relative mapping type according to an exemplary embodiment of the inventive concept;

FIG. 6 is a diagram of the highlight movement using an absolute mapping type according to an exemplary embodiment of the inventive concept;

FIG. 7 is a diagram of change of the highlight to the cursor using the input device of the relative mapping type according to an exemplary embodiment of the inventive concept;

FIG. 8 is a diagram of change of the highlight to the cursor using the absolute mapping type input according to an exemplary embodiment of the inventive concept;

FIG. 9 is a flowchart of a method for changing the cursor to the highlight according to an exemplary embodiment of the inventive concept;

FIG. 10 is a diagram of one cursor movement using the input of the absolute mapping type according to another exemplary embodiment of the inventive concept; and

FIG. 11 is a diagram of another cursor movement using the absolute mapping type input according to another exemplary embodiment of the inventive concept.

### DETAILED DESCRIPTION OF THE EXEMPLARY EMBODIMENTS

Reference will now be made in detail to the exemplary embodiments of the inventive concept, examples of which are illustrated in the accompanying drawings, wherein like reference numerals refer to the like elements throughout. The exemplary embodiments are described below to explain the inventive concept by referring to the figures.

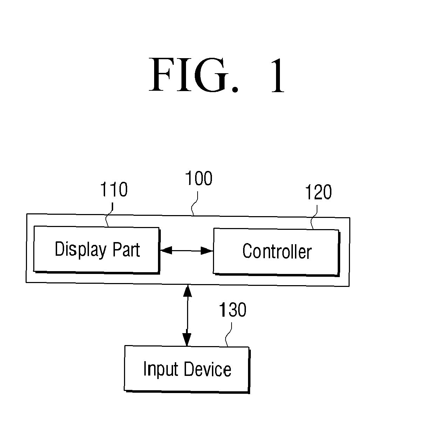

FIG. 1 is a simplified diagram of a display apparatus according to an exemplary embodiment of the inventive concept. As shown in FIG. 1, the display apparatus 100 includes a display 110 and a controller 120. While the display 100 can be a smart TV by way of example, it can be implemented using various display devices such as monitors, projectors, and tablet PCs. In particular, the display apparatus 100 can be controlled according to a user manipulation input 130 as shown in FIG. 1.

The input device 130 can receive the user manipulation and send a control instruction which corresponds to the user manipulation of the display apparatus 100. Particularly, according to a user manipulation, the input 130 can generate and send to the display apparatus 100 a control instruction for moving a cursor and a control command for selecting an icon.

In so doing, the input 130 can be implemented using a relative mapping type input or an absolute mapping type input. In particular, the relative mapping type input moves the cursor according to a change of motion of the input which can include a pointing device or a mouse. The absolute mapping type input moves the cursor to the point of the display 110 in accordance with the user's manipulation point of input to the input, and can be implemented using a mobile device including a touch screen.

While the input device 130 can be equipped outside of display apparatus 100 and connected, for example, to the display apparatus 100 via a cable or wirelessly connected, the input device 130 can be implemented in the display apparatus 100. For example, the input 130 can be implemented as a touch screen in the display apparatus 100.

The display 110 displays at least one of image data and a Graphic User Interface (GUI) under the control of controller 120. In particular, the display 110 can display the cursor which is moveable by the input 130 and can display at least one selectable icon.

The controller 120 controls the display apparatus 100 according to user manipulation of input 130. In particular, the controller 120 can move the cursor displayed in the display 110 according to the user manipulation which was input to the input 130 by the user. When the cursor enters a preset region based on one location of the at least one icon, the controller 120 can remove the cursor and can change the display status of the icon pointed to by the cursor.

In particular, when the display 110 displays the cursor and at least one icon and user manipulation for moving the cursor is input through the input 130, the controller 120 can calculate a coordinate value which corresponds to the input user manipulation and can move the cursor which is displayed on the display 110 in accordance with the calculated coordinate value.

Upon moving the cursor according to a user manipulation, the controller 120 can determine when the cursor enters the preset region, based on a first icon.

Upon determining that the cursor enters the preset region based on the first icon, the controller 120 can control the display 110 to remove the cursor and to change the display status of the first icon. For example, when determining that the cursor enters the preset region based on the first icon, the controller 120 can make the cursor disappear little by little and can gradually highlight the first icon.

As an example, the display status of the first icon may be changed by highlighting the first icon. The first icon can flicker or at least one of a color, a shape, and a size of the first icon can be changed, etc., within the scope of the inventive concept.

As stated above, when the cursor is placed on the icon that is within the preset region, the cursor is removed and the display status of the icon is changed. Thus, the display apparatus can reduce the graphics computation which displays the cursor and may provide the user with the more intuitive UI.

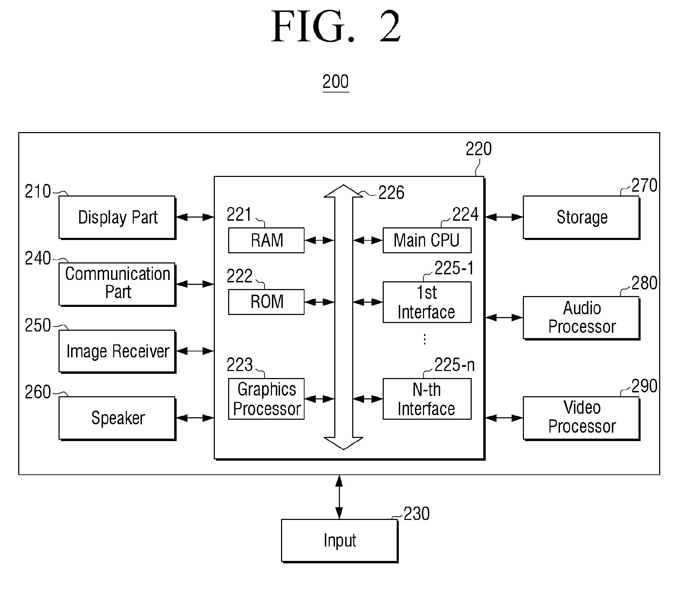

FIG. 2 is a detailed diagram of a display apparatus according to another exemplary embodiment of the inventive concept. As shown in FIG. 2, the display apparatus 200 includes a display 210, a controller 220, a communicator 240, an image receiver 250, a speaker 260, a storage device 270, an audio processor 280, and a video processor 290. The display apparatus 200 can be controlled by user manipulation through an input 230.

FIG. 2 depicts the components of the display apparatus 100 which has various functions such as communication function, broadcasting reception function, video play function and a display function. Accordingly, some of the components of FIG. 2 can be omitted or modified, and some other components may be added.

The display 210 displays a video frame by processing image data received from the image receiver 250 in the video processor 290, and at least one of various screens generated by the graphics processor 223. In particular, the display 210 can display the cursor and at least one icon generated by the graphics processor 223.

The communicator 240 communicates with various external devices according to various communication schemes. The communicator 240 can include various communication chips such as a Wi-Fi® chip, a Bluetooth® chip, a Near Field Communication (NFC) chip, and a wireless communication chip. The Wi-Fi® chip, the Bluetooth® chip, and the NFC chip conduct the communication according to Wi-Fi® scheme, Bluetooth® scheme, and NFC scheme respectively. The NFC chip operates according to the NFC scheme using a band of 13.56 MHz among various RF-ID frequencies such as 135 kHz, 13.56 MHz, 433 MHz, 860 ∼ 960 MHz, and 2.45 GHz. The Wi-Fi® chip or the Bluetooth® chip can be used to send and receive connection information such as SSID and session key, to connect the communication using the connection information, and to send and receive various information. The wireless communication chip conducts the communication in conformity with various communication standards such as IEEE, Zigbee, 3rd Generation (3G), 3rd Generation Partnership Project (3GPP), and Long Term Evolution (LTE).

The image receiver 250 receives the image data through various sources. For example, the image receiver 250 can receive broadcasting data from an external broadcasting station, and receive image data from an external device (for example, a DVD device).

The speaker 260 outputs various audio data processed by the audio processor 280, various alarm sounds, or voice messages.

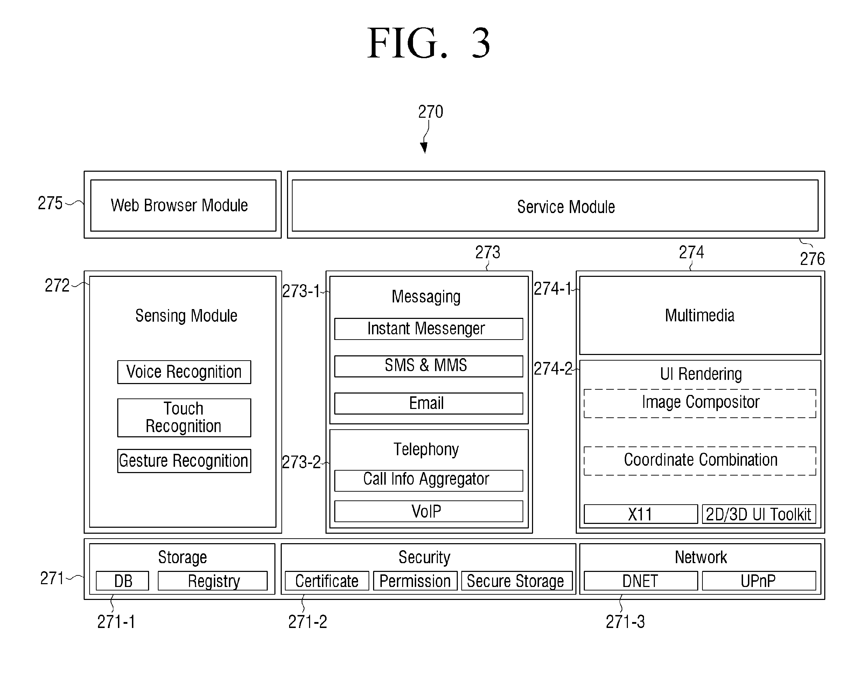

The storage device 270 stores various modules for driving the display apparatus 200. Software stored to the storage 270 is explained by referring to FIG. 3. Referring to FIG. 3, the storage 270 can include software including a base module 271, a sensing module 272, a communication module 273, a presentation module 274, a web browser module 275, and a service module 276.

The base module 271 is a base module which processes signals received from hardware of the display apparatus 200 and sending the processed signals to a higher layer module. The base module 271 includes a storage module 271-1, a security module 271-2, and a network module 271-3. The storage module 271-1 is a program module for managing a DataBase (DB) or a registry. A main CPU 224 can fetch various data by accessing a DB of the storage 270 using the storage module 271-1. The security module 271-2 is a program module for supporting hardware certification, request permission, and secure storage. The network module 271-3 supports the network connection and includes a DNET module and an UPnP module.

The sensing module 272 collects information from various sensors, and analyzes and manages the collected data. The sensing module 272 may include a face recognition module, a voice recognition module, a motion recognition module, and an NFC recognition module.

The communication module 273 is a module which communicates with the outside. The communication module 273 can include a messaging module 273-1 such as messenger program, Short Message Service (SMS) and Multimedia Message Service (MMS) program, and Email program, and a telephony module 273-2 including a call info aggregator program module and a VoIP module.

The presentation module 274 is a module for configuring the display screen. The presentation module 274 includes a multimedia module 274-1 for playing and outputting multimedia contents, and a UI rendering module 274-2 for processing UI and graphics. The multimedia module 274-1 can include a player module, a camcorder module, and a sound processing module. Accordingly, the multimedia module 274-1 plays various multimedia contents, and generates and plays the screen and the sound. The UI rendering module 274-2 can include an image compositor module for combining images, a coordinate combination module for combining and generating coordinates on the screen for displaying the image, an X11 module for receiving various events from the hardware, and a 2D/3D UI toolkit for providing a tool for creating a 2D or 3D UI.

The web browser module 275 accesses a web server through web browsing. The web browser module 275 can include various modules such as web view module for creating a web page, download agent module for downloading, bookmark module, and a Webkit® module.

The service module 276 includes various applications for providing diverse various services. In particular, the service module 276 can include various program modules such as navigation program, content play program, game program, e-book program, calendar program, alarm management program, and widgets.

While various programs modules are depicted in FIG. 3, the various programs modules can be partially omitted, modified, or added according to a type and characteristics of the display apparatus 200. For example, when the display apparatus 200 is implemented as a tablet PC, the base module 271 can further include a location determination module for determining a GPS-based location, and the sensing module 272 can further include a sensing module for detecting the user's motion.

Referring back to FIG. 2, the audio processor 280 processes audio data. The audio processor 280 can perform various processes such as decoding, amplifying, and noise filtering of the audio data.

The video processor 290 processes the image data received at the image receiver 250. The video processor 290 can perform various image processes such as decoding, scaling, noise filtering, frame rate conversion and changing the resolution of the image data.

The controller 220 controls the operations of the display apparatus 200 using the various programs stored in the storage device 270.

As shown in FIG. 2, the controller 220 includes a RAM 221, a ROM 222, a graphics processor 223, the main CPU 224, first through n-th interfaces 225-1 through 225-n, and a bus 226. The RAM 221, the ROM 222, the graphics processor 223, the main CPU 224, and the first through n-th interfaces 225-1 through 225-n can be connected with each other via the bus 226.

The ROM 222 stores an instruction set for the system booting. When a turn-on instruction is input and power is supplied, the main CPU 224 copies the O/S stored to the storage device 270, to the RAM 221 according to the instruction stored to the ROM 222, and boots up the system by executing the O/S. When the booting is completed, the main CPU 224 copies to the RAM 221 the various application programs stored in the storage device 270, , and performs various operations by executing the application program copied to the RAM 221.

The graphics processor 223 generates the screen including various objects such as icon, image, and text, using a calculator (not shown) and a renderer (not shown). The calculator calculates attribute values for displaying the objects such as coordinate value, shape, size, and color according to a layout of the screen using the control instruction received from the input 230. The renderer generates the screen of various layouts including the object based on the attribute values calculated by the calculator. The screen generated by the renderer is displayed in a display region of the display 210.

The main CPU 224 accesses the storage device 270 and performs a booting function using the O/S stored to the storage device 270. The main CPU 224 performs various operations using the various programs, contents and data stored to the storage device 270.

The first through n-th interfaces 225-1 through 225-n are connected to the above-stated components. One of the interfaces may be a network interface connected to an external device over the network.

In particular, the controller 220 moves the displayed cursor according to the user manipulation through the input 230. When the cursor enters a preset region based on the location of the first icon of at least one icon, the controller 220 controls the display 210 to remove the cursor and to change the display status of the first icon.

In this exemplary embodiment, when the cursor enters the preset region based on the location of the first icon, the controller 220 can control the display 210 to remove the cursor and to highlight the first icon.

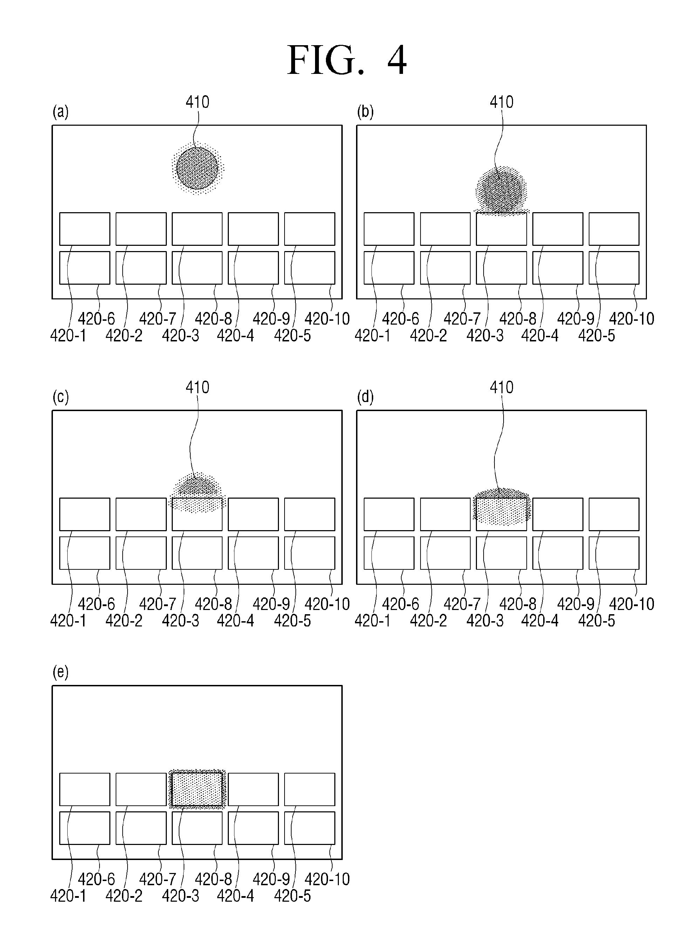

More specifically, as shown in FIG. 4(a), the display 210 displays a cursor 410 and ten icons 420-1 through 420-10. When the user command for downwardly moving the cursor 410 is input by the user through the input 230, the controller 220 moves the cursor 410 downwards as shown in FIG. 4(b). At this time, when the input 230 is a relative mapping type input, the user command for the cursor down can be the user motion which moves the input 230 in a downward fashion. When the input 230 is the absolute mapping type input, the user can touch the touch screen of the input device 230 with a finger and drag it down, as the command.

In particular, when the cursor 410 is placed in a preset region based on the third icon 420-3, the controller 220 can control the display 210 to make the cursor 410 disappear with an animation effect as if the cursor 410 is gradually absorbed by the third icon 420-3 as shown in FIGS. 4(b), 4(c) and 4(d). The controller 220 can control the display 210 to remove the cursor 410 and to highlight the third icon 420-3 as shown in FIG. 4(e).

When the display 210 displays a plurality of icons and the user manipulation is input again through the input 230, the controller 220 can control the display 210 to highlight another one of the icons according to the input manipulation by the user.

In particular, when the input is the relative mapping type input, the controller 220 can control the display 210 to move the highlight to another icon according to a direction of the user manipulation which is input to the relative mapping type input.

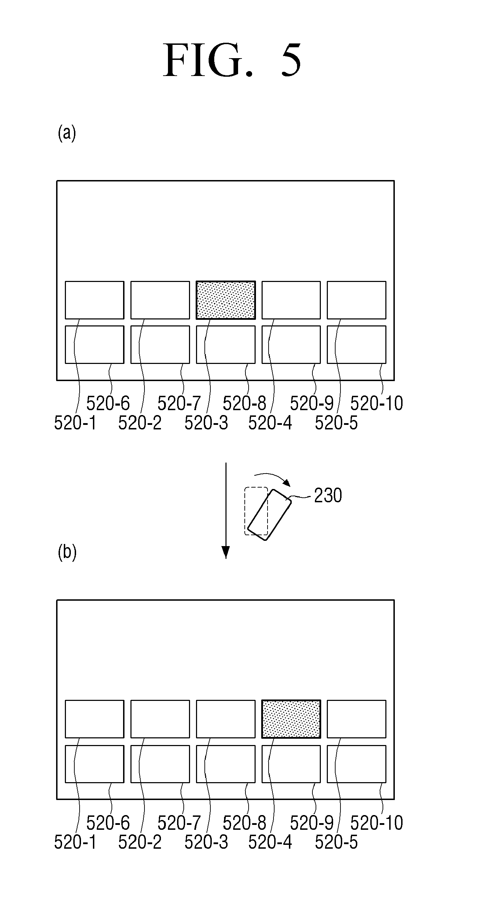

More specifically, when the third icon 520-3 is highlighted as shown in FIG. 5(a) and the user manipulation to the right is input through the relative mapping type input , the controller 220 can control the display 210 to highlight the fourth icon 520-4 displayed on the right of the third icon 520-3 as shown in FIG. 5(b). In so doing, when the relative mapping type input is a pointing device, the user manipulation to the right can be a motion which rotates the pointing device to the right.

In particular, the controller 220 can move the highlight display according to the manipulation through the user input (for example, a rotation angle of the pointing device) through the relative mapping type input. For example, when the pointing device rotates 10 degrees through 20 degrees to the right, the controller 220 can move the highlight to the fourth icon 520-4. When the pointing device rotates 20 degrees through 40 degrees, the controller 220 can move the highlight to the fifth icon 520-5.

While the relative mapping type input is, for example, the pointing device in this exemplary embodiment, the relative mapping type input such as a mouse can be employed.

When the input 230 is the absolute mapping type input, the controller 220 can control the display to move the highlight to the icon which corresponds to the input point of the user manipulation which is input to the absolute mapping type input . At this time, the absolute mapping type input can be a smart phone including a touch screen. When the smart phone including the touch screen is the input 230 for controlling the display apparatus 200, the touch screen and the display screen of the display apparatus 200 can be synchronized.

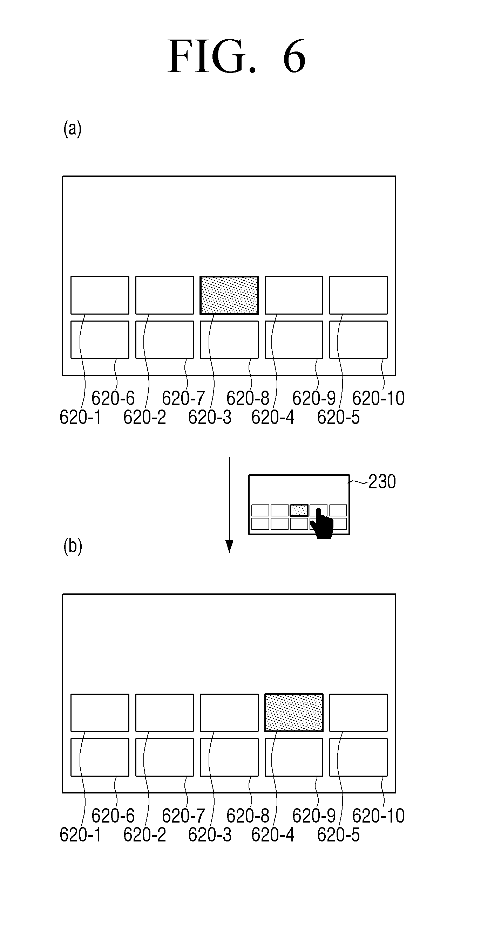

In particular, when the third icon 620-3 is highlighted as shown in FIG. 6(a) and the user touch is input at the point which corresponds to the fourth icon 620-4 through the absolute mapping type input, the controller 220 can control the display 210 to highlight the fourth icon 620-4 which corresponds to the user's touch point as shown in FIG. 6(b).

The controller 220 can control the display 210 to remove the highlight of the icon according to the user manipulation of the input 230 and can once again display the cursor.

In particular, when the input is the relative mapping type input and the user manipulation is input from the highlighted icon toward the region including no icon, the controller 220 can control the display 210 to change the highlight to the cursor.

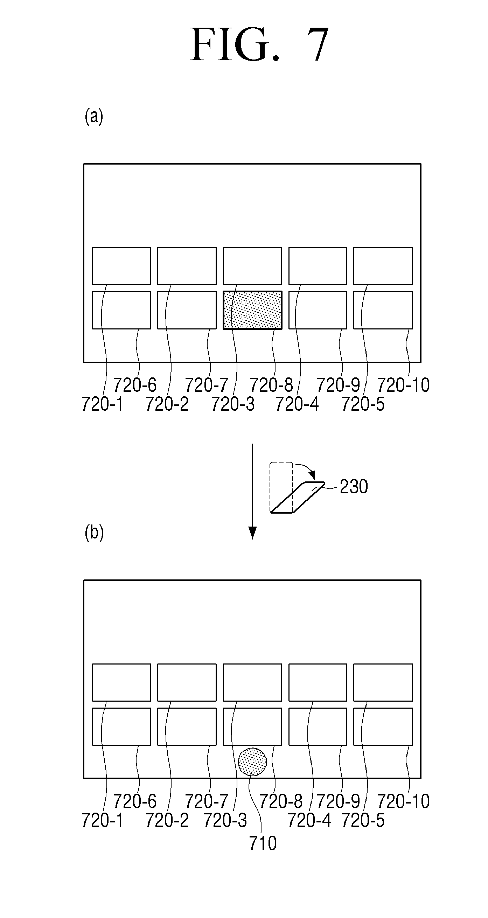

When an eighth icon 720-8 is highlighted as shown in FIG. 7(a) and the user's downward manipulation is input through the relative mapping type input , the controller 220 can control the display 210 to remove the highlight of the eighth icon 720-8 and to display the cursor 710 below the eighth icon 720-8 as shown in FIG. 7(b).

In so doing, the controller 220 can gradually change the highlight to the cursor 710 as shown in FIGS. 4(b), 4(c) and 4(d).

When the input is the absolute mapping type input and the user manipulation is input outside the plurality of the icons displayed on the display 210 through the input 230, the controller 220 can control the display 210 to change the highlight to the cursor of the user's manipulation input point.

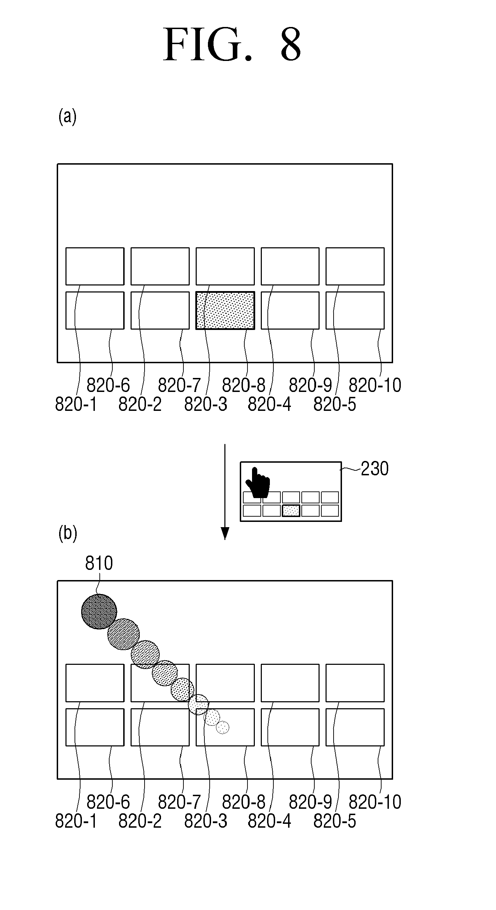

In particular, when an eighth icon 820-8 is highlighted as shown in FIG. 8(a) and the user touch is input to the upper left region of the touch screen of the absolute mapping type input , the controller 220 can determine no icon in the user's touch point, and can control the display 210 to remove the highlight of the eighth icon 820-8 as shown in FIG. 8B and to display the cursor 810 at the user's touch point.

In this case, as the highlight is changed to the cursor 810, the user may lose the location of the cursor 810. Hence, the controller 220 can change the highlight to the cursor with the animation effect which successively moves the cursor from the highlighted icon to the input point of the user's manipulation. For example, as the cursor gradually enlarges and darkens upon moving from the highlighted icon to the user's touch input point, as shown in FIG. 8B, the user can easily check the location of the moved cursor 810 and the entertainment factor can be increased.

By way of example, while the cursor is positioned in the preset region based on the first icon, the first icon is highlighted. Notably, the display status of the first icon can be changed, in other fashions. For example, the display status of the first icon can be changed by flickering the first icon or by changing at least one of the color, the size, the shape and the transparency of the first icon.

While the input device 230 is described as the separate device outside the display apparatus 200, by way of example, the input device 230 may be equipped inside the display apparatus 200. For example, the input device 230 can be implemented as the touch screen of the display 210 of the display apparatus 200.

While the absolute mapping type input or the relative mapping type input is used to move the highlight to the icon, by way of example, the highlight can be moved using a remote control including four-direction keys.

As stated above, as the GUI of the display screen is displayed using one of the cursor or the highlight, the display apparatus 200 can reduce the unnecessary load of the graphics processing and can provide an intuitive GUI to the user.

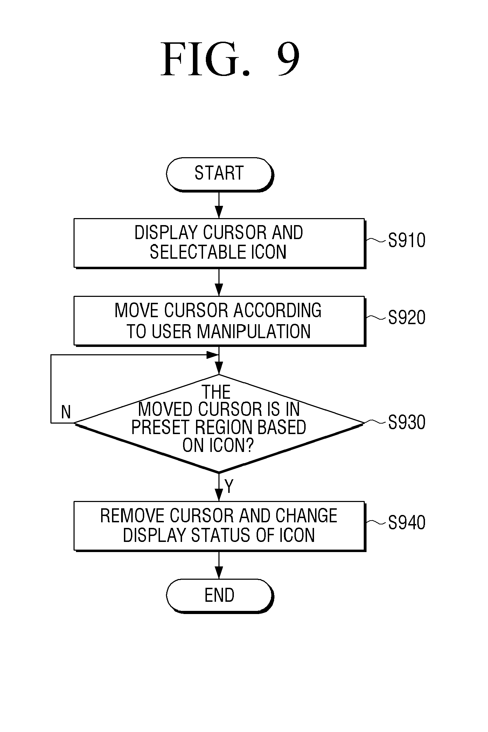

Hereafter, a method of controlling the display apparatus 200 is explained in detail, by referring to FIG. 9.

The display apparatus 200 displays the cursor and the selectable icon (S910). The cursor can be moved by the input 230, and the icon can be selected by the input 230.

The display apparatus 200 moves the cursor according to the user manipulation (S920).

The display apparatus 200 determines whether the moved cursor enters a preset region based on the icon (S930).

When the moved cursor enters the preset region based on the icon, the display apparatus 200 removes the cursor and changes the display status of the icon (S940). In so doing, the display apparatus 200 can gradually change the cursor to the highlight of the icon as shown in FIGS. 4(b), 4(c) and 4(d).

According to the method of controlling the display apparatus 200, the display apparatus 200 can display only one of the cursor or the highlight as the GUI, and thus reduce the unnecessary graphics processing.

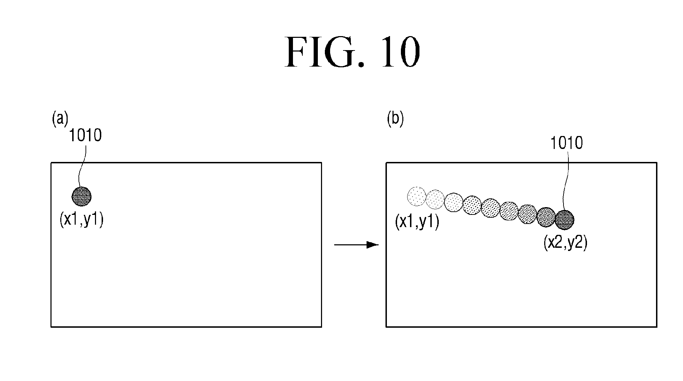

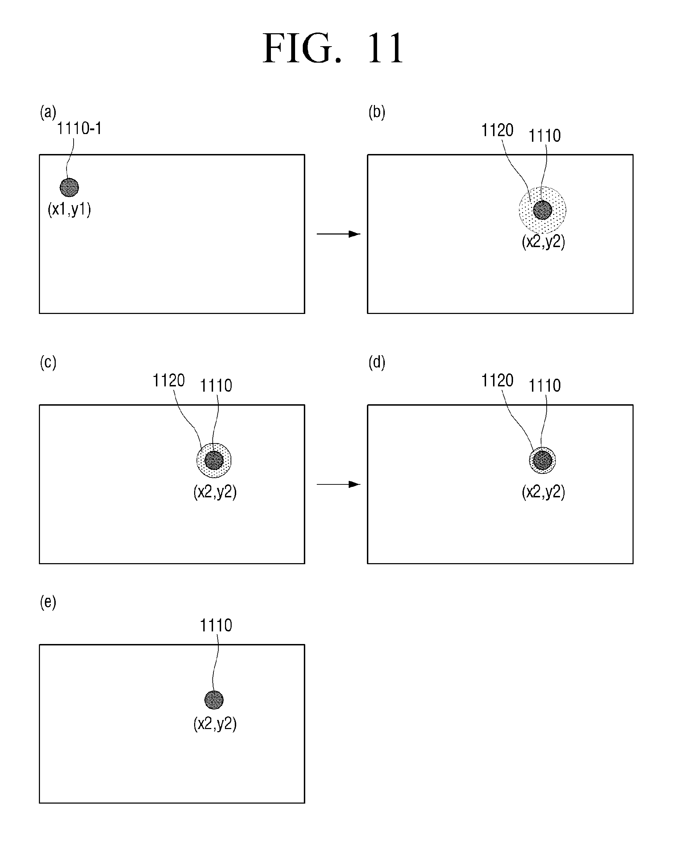

Now, another exemplary embodiment of the inventive concept is described, with reference to FIGS. 10 and 11. In particular, when the absolute mapping type input device is used to move the cursor, a method for displaying the cursor movement is illustrated.

The display 210 displays the cursor in the screen. The cursor can be moved by the absolute mapping type input device.

When the user manipulation is input through the absolute mapping type input device, the controller 220 can move the cursor to the point which corresponds to the user's manipulation input point on the screen of the display 210.

Specifically, when the cursor is moved by the absolute mapping type input device of the, the cursor can move discontinuously in the display screen, rather than moving continuously. Accordingly, the user can lose the cursor. Hence, to easily locate the moved cursor point, the controller 220 can display various animation effects to indicate the cursor movement.

When a cursor 1010 is displayed at a first point (x1, y1) in the display screen as shown in FIG. 10(a) and the user manipulation (for example, the user manipulation of touching a point which corresponds to a second point (x2, y2) on the touch screen of the input device) is input to move the cursor to the second point (x2, y2) of the display screen through the absolute mapping type input device , the controller 220 moves the cursor 1010 to the second point (x2, y2) of the display screen. In so doing, upon moving the cursor 1010 to the second point of the display screen, as shown in FIG. 10(b), the controller 220 can control the display 210 to display the cursor 1010 with an animation effect which gradually darkens and moves the cursor 1010 from the first point (x1, y1) to the second point (x2, y2).

Alternatively, when a cursor 1110 is displayed at a first point (x1, y1) in the display screen as shown in FIG. 11(a) and the user manipulation (for example, the user manipulation of touching a point which corresponds to a second point (x2, y2) on the touch screen of the input device) is input to move the cursor to the second point (x2, y2) of the display screen through the absolute mapping type input, the controller 220 moves the cursor 1110 to the second point (x2, y2) of the display screen. In so doing, the controller 220 can display the cursor 1110 together with an animation effect 1120 of the shape which corresponds to the cursor 1110 around the cursor 1110 which is displayed at the second point as shown in FIG. 11(b). The controller 220 can control the display 210 to gradually reduce the size of the animation effect 1120 as shown in FIGS. 11(c) and 11(d) as time passes, in order to remove the animation effect 1120, and to only display the cursor 1110 at the second point (x2, y2) as shown in FIG. 11E.

Accordingly, when the cursor moves discontinuously according to the user manipulation which is input through the absolute mapping type input, the animation effect is displayed together so that the user can more easily recognize the movement location and direction of the cursor.

While the cursor moves discontinuously according to the user manipulation which is input through the absolute mapping type input, by way of example, the inventive concept is applicable to other embodiments of moving the cursor discontinuously. For example, when the user manipulation is input using the relative mapping type input and then using the absolute mapping type input and the cursor moves discontinuously, the discontinuous cursor movement and the animation effect of the cursor movement can be displayed together, as described above.

Meanwhile, the control method of the display apparatus according to various exemplary embodiments of the inventive concept can be programmed and provided to the display apparatus.

In particular, a non-transitory computer readable storage medium can contain the program which includes steps for displaying the cursor and the selectable icon, moving the cursor according to the user manipulation which is input, and removing the cursor and changing the display status of the icon when the cursor moves into the preset region based on the location of the icon.

The non-transitory computer readable medium indicates a device-readable medium for storing data semi-permanently, rather than the medium such as register, cache, or memory which stores the data for a short time. Specifically, various applications or programs can be stored to the non-transitory computer readable medium such as CD, DVD, hard disc, BlueRay® disc, USB, memory card, and ROM.

Although a few exemplary embodiments of the inventive concept have been shown and described, it will be appreciated by those skilled in the art that changes may be made in these embodiments without departing from the principles and spirit of the inventive concept, the scope of which is defined in the appended claims and their equivalents.

## Claims

1. A method of controlling a display apparatus which is controlled by an input device, comprising:
displaying a cursor and a selectable icon;
moving the cursor according to a user manipulation input through the input device; and
when the cursor moves into a preset region based on a location of the icon, performing a changing operation by removing the cursor and changing the display status of the icon.

2. The method of claim 1, wherein, when the cursor moves into the preset region based on the location of the icon, the changing operation removes the cursor and changes the display status of the icon by highlighting the icon.

3. The method of claim 2, further comprising:
when a plurality of icons is displayed and the user manipulation is re-input through the input device, moving the highlight of the icon to one of the plurality of the icons according to the re-input user manipulation.

4. The method of claim 3, wherein, when the input device is an input device of an absolute mapping type, the moving operation moves the highlight to an icon corresponding to an input point of the user manipulation which is input to the input device of the absolute mapping type.

5. The method of claim 3, wherein, when the input device is an input device of a relative mapping type, the moving operation moves the highlight to another icon according to a direction of the user manipulation which is input to the input device of the relative mapping type.

6. The method of one of claims 2, 3 and 5, further comprising:
when the input device is an input device of a relative mapping type and a user manipulation is input through the input device in a direction from the highlighted icon to a region comprising no icon, changing the highlight to the cursor.

7. The method of one of claims 2, 3 and 4, further comprising:
when the input device is an input device of an absolute mapping type and a user manipulation is input to a region outside the plurality of the icons through the input device, changing the highlight to the cursor of a user manipulation input point.

8. The method of claim 7, wherein the operation for changing to the icon creates an animation effect which continuously moves from the highlighted icon to the user manipulation input point, and changes the highlight to the cursor.

9. A display apparatus controlled by an input device, the display apparatus comprising:
a display part for displaying a cursor and a selectable icon; and
a controller for moving the displayed cursor according to a user manipulation input through the input device, and removing the cursor and changing the display status of the icon when the cursor moves into a preset region based on a location of the icon.

10. The display apparatus of claim 9, wherein, when the cursor moves into the preset region based on the location of the icon, the controller controls the display part to remove the cursor and to highlight the icon.

11. The display apparatus of claim 10, wherein, when a plurality of icons is displayed and the user manipulation is re-input through the input device, the controller controls the display part to move the highlight of the icon to one of the plurality of the icons according to the re-input user manipulation.

12. The display apparatus of claim 11, wherein, when the input device is an input device of an absolute mapping type, the controller controls the display part to move the highlight to an icon corresponding to an input point of the user manipulation which is input to the input device of the absolute mapping type.

13. The display apparatus of claim 11, wherein, when the input device is an input device of a relative mapping type, the controller controls the display part to move the highlight of the icon to another icon corresponding to a direction of the user manipulation which is input to the input device of the relative mapping type.

14. The display apparatus of one of claims 10, 11 and 13, wherein, when the input device is an input device of a relative mapping type and a user manipulation is input through the input device in a direction from the highlighted icon to a region comprising no icon, the controller controls the display part to change the highlight to the cursor.

15. The display apparatus of one of claims 10, 11 and 12, wherein, when the input device is an input device of an absolute mapping type and a user manipulation is input to a region outside the plurality of the icons through the input device, the controller controls the display part to change the highlight to the cursor at a user manipulation input point.
